# EUROPEAN PATENT APPLICATION

(11) **EP 4 759 971 A1**
(43) Date of publication of application: **17.06.2026**
(21) Application number: 25222309.4
(22) Date of filing: 10.12.2025
(51) Int. Cl.: C25D 3/12, C25D 5/14, C25D 5/50, H01M 50/128, H01M 50/119

(54) **NICKEL-PLATED HEAT-TREATED STEEL SHEET FOR BATTERY CASE HAVING EXCELLENT CORROSION RESISTANCE AND MANUFACTURING METHOD THEREOF**

(30) Priority: 11.12.2024 KR 20240184206
(71) Applicant: TCC Steel Corp., Gyeongsangbuk-do 37862 (KR)
(72) Inventor: KIM, YOON HAN, 37577 Pohang-si (KR); KWON, TAE WOO, 37655 Pohang-si (KR); SHON, JE HA, 07584 Seoul (KR); KIM, TAE GEUN, 37834 Pohang-si (KR); KIM, TAE HA, 37566 Pohang-si (KR); HEO, JOON YOUNG, 47571 Busan (KR); LEE, YO HAN, 37717 Pohang-si (KR)
(74) Representative: Mewburn Ellis LLP

(57) **Abstract**

The present disclosure relates to a nickel-plated heat-treated steel sheet for a battery case having excellent corrosion resistance and a manufacturing method thereof. In one embodiment, the nickel-plated heat-treated steel sheet comprises a base steel sheet; and a nickel layer formed on at least one surface of the base steel sheet; wherein the nickel layer is laminated in two or more layers, and a unit weight sequentially decreases from the base steel sheet toward a surface of the nickel layer.

## Description

### CROSS-REFERENCE TO RELATED APPLICATION(S)

This application claims the benefit of priority to Korean Patent Application No. 10-2024-0184206, filed on December 11, 2024, in the Korean Intellectual Property Office, the disclosure of which is incorporated herein by reference in its entirety.

### BACKGROUND

The present disclosure relates to a nickel-plated heat-treated steel sheet for a battery case having excellent corrosion resistance and a manufacturing method thereof. More specifically, the present disclosure provides nickel-plated heat-treated steel sheet for a battery case having excellent corrosion resistance and a manufacturing method thereof by applying a multi-layered nickel layer in which the size and density of nickel particles are different.

Recently, as the use of renewable energy increases and the transition to electric vehicles in the automotive industry accelerates, the battery market is growing rapidly. Among them, chargeable and dischargeable cylindrical lithium-ion batteries are being applied to various industries based on their standardized sizes, significantly expanding their field of application. In addition, cylindrical lithium-ion batteries have a low number of processes, resulting in low production costs, and are advantageous for mass production, so they are rapidly increasing their market share based on these advantages.

A nickel-plated heat-treated steel sheet is used for the lithium (Li) ion cylindrical battery case. The reason is that nickel (Ni), which is a plating element of the nickel-plated heat-treated steel sheet, is a more noble metal than iron (Fe) and is advantageous in protecting the surface, and has excellent spot weldability, formability, and corrosion resistance. In addition, since iron (Fe) has high resistance to alkalis such as lithium ions, the inner surface of the battery case is manufactured with a lower nickel-plating amount than the outer surface.

Recently, research is being conducted to secure the lightweight properties of cylindrical lithium-ion batteries, thereby minimizing carbon dioxide (CO₂) production to ensure eco-friendliness and to increase battery capacity. To secure the lightweight properties of these lithium-ion batteries, the thickness of the battery case must be minimized, and in particular, research is required to secure corrosion resistance even with a thin nickel-plating layer thickness.

Background technology related to the present disclosure is disclosed in Japanese Patent Registration No. 3594286 (Published on Nov. 24, 2004, Title of Invention: Surface-treated steel sheet for battery case, battery case using the same, manufacturing method thereof, and battery).

### SUMMARY

One object of the present disclosure is to provide a nickel-plated heat-treated steel sheet having excellent corrosion resistance, strength and durability.

Another object of the present disclosure is to provide a nickel-plated heat-treated steel sheet which has excellent corrosion resistance even with a thin plating layer thickness, thereby having excellent lightweight properties, excellent eco-friendliness, and an effect of increasing battery capacity.

Another object of the present disclosure is to provide a nickel-plated heat-treated steel sheet which minimizes defects such as cracks, pinholes, and voids in the nickel layer to have excellent corrosion resistance and surface quality, and has excellent corrosion resistance, thereby having excellent explosion resistance and structural safety when applied to a battery case.

Another object of the present disclosure is to provide a nickel-plated heat-treated steel sheet capable of maximizing battery life from the external environment due to excellent interlayer adhesion and excellent surface conductivity.

Another object of the present disclosure is to provide a nickel-plated heat-treated steel sheet having excellent productivity and economic efficiency.

Another object of the present disclosure is to provide a method for manufacturing the nickel-plated heat-treated steel sheet.

One aspect of the present disclosure relates to a nickel-plated heat-treated steel sheet. In one embodiment, the nickel-plated heat-treated steel sheet comprises a base steel sheet; and a nickel layer formed on at least one surface of the base steel sheet; wherein the nickel layer is laminated in two or more layers, and a unit weight sequentially decreases from the base steel sheet toward a surface of the nickel layer.

In one embodiment, the nickel layer may comprise one or more base layers and a surface layer sequentially formed on at least one surface of the base steel sheet, and the base layer may have a unit weight of 22 to 50 g/m², the surface layer may have a unit weight of 4 to 10 g/m², and the nickel layer may have a unit weight of 26 to 54 g/m².

Another aspect of the present disclosure relates to a method for manufacturing the nickel-plated heat-treated steel sheet. In one embodiment, the method for manufacturing a nickel-plated heat-treated steel sheet comprises the steps of: forming one or more first plating layers by electroplating using a first plating solution containing nickel sulfate, nickel chloride, and boric acid on at least one surface of a base steel sheet; manufacturing a plated sheet by forming a second plating layer on the outermost surface of the first plating layer by electroplating using a second plating solution containing nickel sulfate, nickel chloride, boric acid, and an additive; and heat-treating the plated sheet; wherein, in the plated sheet, a plating amount sequentially decreases from the base steel sheet toward the second plating layer, and the nickel-plated heat-treated steel sheet comprises a base steel sheet and a nickel layer formed on at least one surface of the base steel sheet, the nickel layer is laminated in two or more layers and a unit weight sequentially decreases from the base steel sheet toward a surface of the nickel layer.

The nickel-plated heat-treated steel sheet for a battery case according to the present disclosure has excellent corrosion resistance, strength, and durability. By minimizing defects such as cracks, pinholes, and voids in the nickel layer, the nickel-plated heat-treated steel sheet has excellent corrosion resistance and surface quality even with a thin plating layer, and has excellent lightweight properties, thereby leading to eco-friendliness and an increased battery capacity. Furthermore, the nickel-plated heat-treated steel sheet has excellent corrosion resistance, ensuring explosion resistance and structural safety when applied to a battery case. It can suggest a minimum plating thickness to ensure stability in corrosive environments, has excellent interlayer adhesion and surface conductivity to maximize battery life from external environments, and may have excellent productivity and economic efficiency.

In particular, the present disclosure minimizes the thickness of the nickel layer while forming two or more layers of nickel with different particle sizes, thereby forming a corrosion potential difference to effectively delay the corrosion rate of the base material. The nickel layer at the interface with the base steel sheet has relatively coarser particles compared to the nickel layer of the outermost surface, thereby reducing the surface area between the particles of the nickel layer and the base steel sheet interface. This prevents the acceleration of the diffusion of iron (Fe) and nickel (Ni) from the base steel sheet during heat treatment, thereby minimizing the exposure of iron (Fe) to the nickel layer.

In addition, by forming the nickel particles on the surface of the nickel layer to be finer than the nickel particles at the interface of the base steel sheet, defects such as cracks, pinholes, and voids on the surface are minimized, which can prevent local corrosion caused by the external environment.

### BRIEF DESCRIPTION OF THE DRAWINGS

FIG. 1 illustrates a nickel-plated heat-treated steel sheet according to one embodiment of the present disclosure;
FIG. 2 illustrates a conventional nickel-plated heat-treated steel sheet;
FIG. 3 is an SEM photograph illustrating a surface of Experimental Example 1;
FIG. 4 is an SEM photograph illustrating a surface of Experimental Example 9;
FIG. 5 is a photograph illustrating the corrosion resistance evaluation result of Experimental Example 1; and
FIG. 6 is a photograph illustrating the corrosion resistance evaluation result of Experimental Example 9.

### DETAILED DESCRIPTION OF EXEMPLARY EMBODIMENTS

In describing the present disclosure, if it is determined that a detailed description of related known technologies or configurations may unnecessarily obscure the gist of the present disclosure, the detailed description thereof will be omitted.

In addition, terms to be described later are terms defined in consideration of functions in the present disclosure, which may vary depending on the intention or custom of a user or operator, so the definitions should be made based on the contents throughout this specification describing the present disclosure.

### Nickel-plated Heat-treated Steel Sheet

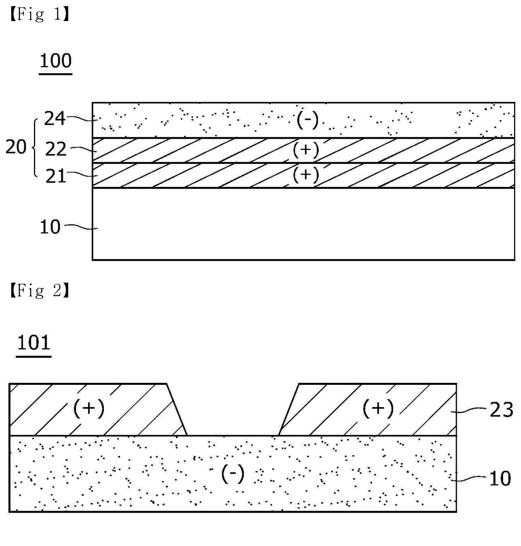

One aspect of the present disclosure relates to a nickel-plated heat-treated steel sheet (or heat-treated steel sheet). FIG. 1 illustrates a nickel-plated heat-treated steel sheet according to one embodiment of the present disclosure. Referring to FIG. 1, the nickel-plated heat-treated steel sheet 100 for a battery case comprises a base steel sheet 10; a nickel layer 20 formed on at least one surface of the base steel sheet 10; and a nickel-iron (Ni-Fe) diffusion layer 30 formed between the base steel sheet 10 and the nickel layer 20.

One aspect of the present disclosure relates to a nickel-plated heat-treated steel sheet. FIG. 1 illustrates a nickel-plated heat-treated steel sheet according to one embodiment of the present disclosure. Referring to FIG. 1, the nickel-plated heat-treated steel sheet 100 includes a base steel sheet 10; and a nickel layer 20 formed on at least one surface of the base steel sheet; wherein the nickel layer 20 is laminated in two or more Layers, and a unit weight sequentially decreases from the base steel sheet toward a surface of the nickel layer.

### Base Steel Sheet

The base steel sheet 10 may comprise carbon (C), silicon (Si), manganese (Mn), phosphorus (P), and iron (Fe).

For example, the base steel sheet comprises, based on the total weight, 0.005 to 0.05 wt% of carbon (C), more than 0 wt% to not more than 0.05 wt% of silicon (Si), 0.1 to 0.6 wt% of manganese (Mn), more than 0 wt% to more than 0.01 wt% of phosphorus (P), and the balance of iron (Fe) and other inevitable impurities. When including the above components and contents, mechanical properties such as strength and hardness targeted by the base steel sheet may be secured.

The carbon (C) may be included in an amount of 0.005 to 0.05 wt% based on the total weight of the base steel sheet. When included in the above range, the mechanical strength such as strength and hardness targeted by the present disclosure can be achieved. For example, the carbon may be included in an amount of 0.01 to 0.04 wt%.

The silicon (Si) may be included in an amount of more than 0 wt% to not more than 0.05 wt% based on the total weight of the base steel sheet. When included in the above range, properties such as ductility and workability of the base steel sheet may be excellent. For example, the silicon may be included in an amount of more than 0 wt% to not more than 0.02 wt%.

The manganese (Mn) may be included in an amount of 0.1 to 0.6 wt% based on the total weight of the base steel sheet. When included in the above range, the strength and hardness targeted by the present disclosure can be easily secured after heat treatment. For example, the manganese may be included in an amount of 0.2 to 0.5 wt%.

The phosphorus (P) may be included in an amount of more than 0 wt% to not more than 0.01 wt% based on the total weight of the base steel sheet. When included in the above range, defects such as segregation of the base steel sheet can be prevented, and mechanical strength can be excellent.

As another example, the base steel sheet may be selected from materials such as black plate (BP) for tin plating, cold-rolled steel (CR), or a full hard material that has not undergone an annealing process after cold rolling in the cold-rolled steel manufacturing process.

### Nickel Layer

The nickel layer 20 is laminated in two or more layers, and a unit weight sequentially decreases from the base steel sheet toward a surface of the nickel layer. Under this condition, it provides an excellent effect of delaying the corrosion rate of the base steel sheet by minimizing the diffusion of iron (Fe) and nickel (Ni) from the base steel sheet during heat treatment. Furthermore, by minimizing the grain size of the outermost surface of the nickel layer, the size of defects such as cracks, pinholes, and voids can be minimized, which can prevent local corrosion occurring from the external environment and improve corrosion resistance.

For example, the nickel layer 20 may be laminated in two or more layers, wherein an average grain size and a unit weight may sequentially decrease from the base steel sheet toward a surface of the nickel layer.

Referring to FIG. 1, the nickel layer 20 may be formed such that one or more base layers 21 and 22, and a surface layer 24 are sequentially formed on at least one surface of the base steel sheet.

Referring to FIG. 1, two or more base layers 21 and 22 sequentially decrease in unit weight from the base steel sheet toward the surface of the nickel layer, and the surface layer 24 may have a lower unit weight than the base layer 22 that is in contact with the surface layer 24. Under this condition, a corrosion potential difference is formed during heat treatment to provide excellent corrosion resistance, and the effect of delaying the corrosion rate of the base steel sheet by minimizing the diffusion of iron (Fe) and nickel (Ni) from the base steel sheet is excellent. Furthermore, the grain size of the outermost surface of the nickel layer is minimized to reduce the size of defects such as cracks, pinholes, and voids, thereby improving corrosion resistance and preventing local corrosion that may occur from the external environment.

FIG. 2 illustrates a conventional nickel-plated heat-treated steel sheet. Referring to FIG. 2, the conventional nickel-plated heat-treated steel sheet 101 has only a nickel layer 23 formed on at least one surface of the base steel sheet 10. Unlike the nickel-plated heat-treated steel sheet of the present disclosure, which has two or more laminated nickel layers with different unit weights, it is difficult to form a corrosion potential difference. Compared to the present disclosure, the effect of delaying the corrosion rate of the base steel sheet may be reduced, or the effect of preventing corrosion by preventing defects on the outermost surface of the nickel layer may be reduced.

In one embodiment, the base layer may have a unit weight of 22 to 50 g/m². When included in the above range, a grain coarsening effect is excellent, which minimizes the diffusion of iron (Fe) and nickel (Ni) from the base steel sheet, thereby providing an excellent effect of delaying the corrosion rate of the base steel sheet.

In one embodiment, the surface layer may have a unit weight of 4 to 10 g/m². When included in the above range, the grain size after heat treatment is minimized, which minimizes the size of defects such as cracks, pinholes, and voids, thereby improving corrosion resistance and preventing local corrosion occurring from the external environment.

In one embodiment, the base layer may have an average grain size of 0.3 to 20 µm. Under this condition, the nickel layer exhibits excellent formability and durability, while effectively delaying the corrosion rate of the base steel sheet by minimizing the diffusion of iron (Fe) and nickel (Ni) from the base steel sheet.

The base layer may have a larger average grain size and a larger unit weight than the surface layer.

In one embodiment, the surface layer may have an average grain size of 0.05 to 10 µm. Under this condition, the defect size of the surface of the nickel layer is minimized, thereby improving surface quality and minimizing corrosion caused by the external environment.

In one embodiment, the nickel layer may have a unit weight of 26 to 54 g/m². When included in the above range, mechanical properties, corrosion resistance, and workability may be excellent.

In one embodiment, the nickel layer may have a thickness of 0.1 to 10 µm. Under this thickness condition, mechanical properties, corrosion resistance, and workability may be excellent.

In one embodiment, the base layer may have a total thickness of 0.1 to 8 µm. Under this condition, durability and corrosion resistance are excellent, and the effect of delaying the corrosion rate of the base steel sheet by minimizing the diffusion of iron (Fe) and nickel (Ni) from the base steel sheet may be excellent.

In one embodiment, each unit base layer constituting the base layer may have a thickness of 0.05 to 4 µm. Under this condition, durability and corrosion resistance are excellent, and the effect of delaying the corrosion rate of the base steel sheet by minimizing the diffusion of iron (Fe) and nickel (Ni) from the base steel sheet may be excellent.

In one embodiment, the surface layer may have a thickness of 0.01 to 2 µm. Under this condition, the grain size after heat treatment is minimized, which minimizes the size of defects such as cracks, pinholes, and voids, thereby preventing local corrosion occurring from the external environment and improving corrosion resistance.

### Method for Manufacturing Nickel-Plated Heat-Treated Steel Sheet

Another aspect of the present disclosure relates to a method for manufacturing the nickel-plated heat-treated steel sheet. In one embodiment, the method for manufacturing the nickel-plated heat-treated steel sheet may comprise the steps of: (S10) forming a first plating layer; (S20) manufacturing a plated sheet; and (S30) heat-treating. More specifically, the method for manufacturing the nickel-plated heat-treated steel sheet comprises the steps of: (S10) forming one or more first plating layers by electroplating on at least one surface of a base steel sheet using a first plating solution containing nickel sulfate, nickel chloride, and boric acid; (S20) manufacturing a plated sheet by forming a second plating layer on the outermost surface of the first plating layer by electroplating using a second plating solution containing nickel sulfate, nickel chloride, boric acid, and an additive; and (S30) heat-treating the plated sheet; wherein, in the plated sheet, a plating amount sequentially decreases from the base steel sheet toward the second plating layer.

### (S10) First Plating Layer Forming Step

This step is a step of forming one or more first plating layers by electroplating on at least one surface of a base steel sheet using a first plating solution containing nickel sulfate, nickel chloride, and boric acid.

In one embodiment, the electroplating may be performed by a conventional electroplating method using a first plating solution. For example, a Watts bath and a sulfamate bath may be used as the plating solution.

In one embodiment, the first plating solution may comprise, based on 1 L, 200 to 250 g/L of nickel sulfate (NiSO₄), 30 to 50 g/L of nickel chloride (NiCl₂), 30 to 50 g/L of boric acid (H₃BO₃), and the balance of water. When electroplating is performed using the first plating solution, the heat-treated steel sheet may have excellent corrosion resistance and conductivity, and the effect of delaying the corrosion rate of the base steel sheet may be excellent.

In one embodiment, the electroplating using the first plating solution may be carried out under conditions of pH 3.0 to 4.0 and current density 5 to 30 A/dm². When electroplating is performed under these conditions, a nickel layer having the physical properties targeted by the present disclosure can be easily formed.

In one embodiment, the first plating solution may have a temperature of 30 to 70°C, but is not limited thereto.

In one embodiment, when forming two or more first plating layers, the plating amount may sequentially decrease from the base steel sheet toward the surface. Under this condition, a corrosion potential difference is easily formed, resulting in excellent corrosion resistance. Additionally, the grain coarsening effect of the first plating layer (unit first plating layer) in contact with the base steel sheet is excellent, which may provide an excellent effect of delaying the corrosion rate of the base steel sheet.

In one embodiment, the first plating layer may have a plating amount of 22 to 50 g/m². When included in the above range, the grain coarsening effect is excellent, while effectively delaying the corrosion rate of the base steel sheet by minimizing the diffusion of iron (Fe) and nickel (Ni) from the base steel sheet.

In one embodiment, the first plating layer may have a total thickness of 0.1 to 8 µm. Under this condition, durability and corrosion resistance are excellent, and the effect of delaying the corrosion rate of the base steel sheet by minimizing the diffusion of iron (Fe) and nickel (Ni) from the base steel sheet may be excellent.

In one embodiment, each unit first plating layer constituting the first plating layer may have a thickness of 0.05 to 4 µm. Under this condition, durability and corrosion resistance are excellent, and the effect of delaying the corrosion rate of the base steel sheet by minimizing the diffusion of iron (Fe) and nickel (Ni) from the base steel sheet may be excellent.

### (S20) Plated Sheet Manufacturing Step

This step is a step of manufacturing a plated sheet by forming a second plating layer on the outermost surface of the first plating layer by electroplating using a second plating solution containing nickel sulfate, nickel chloride, boric acid, and an additive.

In one embodiment, the second plating solution may comprise, based on 1 L, 200 to 250 g/L of nickel sulfate (NiSO₄), 30 to 50 g/L of nickel chloride (NiCl₂), 30 to 50 g/L of boric acid (H₃BO₃), 0.1 to 20 g/L of an additive, and the balance of water. When electroplating is applied using the second plating solution, the heat-treated steel sheet may have excellent corrosion resistance and conductivity. Additionally, it may prevent the generation of defects in the surface layer and minimize the size of defects, resulting in excellent corrosion resistance.

In one embodiment, the additive may include one or more selected from a non-sulfur wetting agent and an organic additive. For example, the additive may include one or more of a non-sulfur wetting agent in an amount of 0.1 to 50 g/L and an organic additive in an amount of 0.1 to 10 g/L.

In one embodiment, the non-sulfur wetting agent does not contain a sulfur component. The non-sulfur wetting agent may prevent an increase in the hardness of the surface layer, thereby preventing the occurrence of cracks and a reduction in corrosion resistance during processing.

In one embodiment, the organic additive may include one or more selected from a brightener, a pH adjuster, and a surfactant. In one embodiment, the brightener may be an unsaturated aliphatic alcohol such as a polyoxy-ethylene adduct of an alcohol, an unsaturated carboxylic acid, formaldehyde, coumarin., etc., but is not limited thereto.

In one embodiment, the electroplating using the second plating solution may be carried out under conditions of pH 3.0 to 4.0 and current density 5 to 30 A/dm². When electroplating is performed under these conditions, a nickel layer having the physical properties targeted by the present disclosure can be easily formed.

In one embodiment, the second plating solution may have a temperature of 30 to 70°C, but is not limited thereto.

In one embodiment, the second plating layer may have a plating amount of 4 to 10 g/m². When included in the above range, it is possible to minimize the grain size after heat treatment, which minimizes the size of defects such as cracks, pinholes, and voids, thereby preventing local corrosion occurring from the external environment and improving corrosion resistance.

In one embodiment, the second plating layer may have a thickness of 0.01 to 2 µm. Under this condition, the grain size after heat treatment is minimized, which minimizes the size of defects such as cracks, pinholes, and voids, thereby preventing local corrosion occurring from the external environment and improving corrosion resistance.

In one embodiment, the sum of the thicknesses of the first plating layer and the second plating layer may be 0.1 to 10 µm. Under this thickness condition, mechanical properties, corrosion resistance, and workability may be excellent.

In one embodiment, the sum of the plating amounts of the first plating layer and the second plating layer may be 26 to 54 g/m². When included in the above range, mechanical properties, corrosion resistance, and workability may be excellent.

### (S30) Heat-Treating Step

This step is a step of heat-treating the plated sheet. For example, an intermediate may be manufactured by heat-treating the plated sheet.

In one embodiment, the heat treatment may be performed at 600 to 730°C. At this temperature, nickel layers with different particle sizes are formed, creating a corrosion potential difference that delays the corrosion rate of the base steel sheet. It also minimizes defects on the surface of the nickel layer, which can result in excellent surface quality and corrosion resistance. For example, the heat treatment may be performed at 680 to 710°C.

The heat treatment may be performed in a reducing atmosphere. The reducing atmosphere may be performed using an atmosphere gas containing one or more of nitrogen (N₂) and hydrogen (H₂). The atmosphere gas may contain 1 to 20 vol% of nitrogen and 1 to 15 vol% of hydrogen. For example, it may contain 5 to 15 vol% of nitrogen and 1 to 10 vol% of hydrogen. Under this condition, the durability and corrosion resistance of the heat-treated steel sheet may be excellent during heat treatment.

In one embodiment, the heat treatment may be performed for 10 seconds to 30 minutes. When heat treatment is performed under this condition, the corrosion resistance and conductivity of the heat-treated steel sheet may be excellent. For example, the heat treatment may be performed for 30 seconds to 5 minutes or 30 seconds to 1 minute.

### (S40) Skin Pass Rolling Step

In one embodiment, the method may further comprise a step of skin pass rolling the intermediate. This step is a step of manufacturing a skin pass rolled material (or nickel-plated heat-treated steel sheet) by skin pass rolling the intermediate. The skin pass rolling may be performed to control the thickness, shape, and surface roughness of the steel sheet, minimize residual stress of the heat-treated steel sheet, and secure uniform material properties.

The rolling may be performed by introducing the intermediate into a rolling mill and skin pass rolling using an upper work roll and a lower rolling roll of the rolling mill.

The nickel-plated heat-treated steel sheet comprises a base steel sheet and a nickel layer formed on at least one surface of the base steel sheet, wherein the nickel layer is laminated in two or more layers, and a unit weight sequentially decreases from the base steel sheet toward a surface of the nickel layer. For example, the nickel layer may be laminated in two or more layers, wherein an average grain size and a unit weight may sequentially decrease from the base steel sheet toward a surface of the nickel layer.

Referring to FIG. 1, the nickel layer 20 may be formed such that one or more base layers 21 and 22, and a surface layer 24 are sequentially formed on at least one surface of the base steel sheet.

Referring to FIG. 1, two or more base layers 21 and 22 sequentially decrease in unit weight from the base steel sheet toward the surface of the nickel layer, and the surface layer 24 may have a lower unit weight than the base layer 22 that is in contact with the surface layer 24. Under this condition, a corrosion potential difference is formed during heat treatment, providing excellent corrosion resistance, and the effect of delaying the corrosion rate of the base steel sheet by minimizing the diffusion of iron (Fe) and nickel (Ni) from the base steel sheet is excellent. Furthermore, by minimizing the grain size of the outermost surface of the nickel layer, the size of defects such as cracks, pinholes, and voids can be minimized, thereby preventing local corrosion occurring from the external environment and improving corrosion resistance.

In one embodiment, the base layer may have a unit weight of 22 to 50 g/m². When included in the above range, a grain coarsening effect is excellent, which minimizes the diffusion of iron (Fe) and nickel (Ni) from the base steel sheet, thereby providing an excellent effect of delaying the corrosion rate of the base steel sheet.

In one embodiment, the surface layer may have a unit weight of 4 to 10 g/m². When included in the above range, the grain size after heat treatment is minimized, which minimizes the size of defects such as cracks, pinholes, and voids, thereby preventing local corrosion occurring from the external environment and improving corrosion resistance.

In one embodiment, the base layer may have an average grain size of 0.3 to 20 µm. Under this condition, the nickel layer exhibits excellent formability and durability, while effectively delaying the corrosion rate of the base steel sheet by minimizing the diffusion of iron (Fe) and nickel (Ni) from the base steel sheet.

In one embodiment, the surface layer may have an average grain size of 0.05 to 10 µm. Under this condition, the defect size of the surface of the nickel layer is minimized, thereby improving surface quality and minimizing corrosion caused by the external environment.

The base layer may have a larger average grain size and a larger unit weight than the surface layer.

In one embodiment, the nickel layer may have a unit weight of 26 to 54 g/m². When included in the above range, mechanical properties, corrosion resistance, and workability may be excellent.

In one embodiment, the nickel layer may have a thickness of 0.1 to 10 µm. Under this thickness condition, mechanical properties, corrosion resistance, and workability may be excellent.

In one embodiment, the base layer may have a total thickness of 0.1 to 8 µm. Under this condition, durability and corrosion resistance are excellent, and the effect of delaying the corrosion rate of the base steel sheet by minimizing the diffusion of iron (Fe) and nickel (Ni) from the base steel sheet may be excellent.

In one embodiment, each unit base layer constituting the base layer may have a thickness of 0.05 to 4 µm. Under this condition, durability and corrosion resistance are excellent, and the effect of delaying the corrosion rate of the base steel sheet by minimizing the diffusion of iron (Fe) and nickel (Ni) from the base steel sheet may be excellent.

In one embodiment, the surface layer may have a thickness of 0.01 to 2 µm. Under this condition, the grain size after heat treatment is minimized, which minimizes the size of defects such as cracks, pinholes, and voids, thereby preventing local corrosion occurring from the external environment and improving corrosion resistance.

While conventional technology could not suggest a minimum plating thickness in a corrosive environment, the present disclosure can suggest a stable minimum plating thickness through defect control of the plating layer. In addition, the present disclosure can secure the explosion resistance and structural safety of the nickel-plated heat-treated steel sheet used for a battery case through the improvement of corrosion resistance of the nickel plating layer. It can also improve corrosion resistance in the most economical way without requiring changes to the specifications demanded in battery-case manufacturing, the material and property variations of the steel sheet that affect downstream processes, or the manufacturing process itself.

Hereinafter, the configuration and operation of the present disclosure will be described in more detail through experimental examples of the present disclosure. However, this is presented as a preferred example of the present disclosure and should not be construed as limiting the present disclosure in any sense. Contents not described herein can be sufficiently technically inferred by those skilled in the art, so a description thereof will be omitted.

### Experimental Example 1

(1) Preparation of Base Steel Sheet: A slab containing 0.03 wt% (300 ppm) of carbon (C), more than 0 to not more than 0.001 wt% (10 ppm) of silicon (Si), 0.31 wt% (3100 ppm) of manganese (Mn), more than 0 to not more than 0.001 wt% (10 ppm) of phosphorus (P), and the balance of iron (Fe) and other inevitable impurities was reheated, and hot rolling and cold rolling were performed to prepare a base steel sheet (carbon steel cold rolled steel sheet) having a thickness of 0.30 mm.
(2) Forming First Plating Layer: One or more first plating layers were formed by electroplating on both sides of the base steel sheet in a first plating solution containing 220 g/L of nickel sulfate, 40 g/L of nickel chloride, and 40 g/L of boric acid, at pH 3.8.
(3) Manufacture of Plated Sheet: A plated sheet was manufactured by forming a second plating layer by electroplating on the outermost surface of the first plating layer in a second plating solution containing 220 g/L of nickel sulfate, 40 g/L of nickel chloride, 40 g/L of boric acid, 5 g/L of a non-sulfur wetting agent (WA129 from Shin-Poong Metal Co.), and 1 g/L of an organic additive (brightener, GL6000C from Shin-Poong Metal Co.), at pH 3.8. In the plated sheet, the plating amount of the second plating layer was lower than that of the first plating layer.
(4) Heat Treatment and Skin Pass Rolling: The plated sheet was heat-treated in a reducing atmosphere (a mixed gas containing 10 vol% of nitrogen (N₂) and 3 vol% of hydrogen (H₂)) at 700°C for 1 minute or less to manufacture an intermediate. Then, the intermediate was put into a skin pass rolling mill and skin pass rolled for 1 pass at a reduction ratio of 1% to manufacture a nickel-plated heat-treated steel sheet.

The nickel-plated heat-treated steel sheet comprised a base steel sheet and a nickel layer formed on at least one surface of the base steel sheet, wherein a base layer (average grain size: 3 µm, unit weight 22 g/m²) and a surface layer (average grain size: 0.5 µm, unit weight 4 g/m²) were sequentially formed on both sides of the base steel sheet. The base layer was formed to have a larger average grain size and a larger unit weight than the surface layer.

### Experimental Examples 2 to 8

Nickel-plated heat-treated steel sheets were manufactured in the same manner as in Experimental Example 1, except that nickel layers with the conditions of base layer unit weight and surface layer unit weight in Table 1 below were applied.

### Experimental Examples 9 to 12

Nickel-plated heat-treated steel sheets were manufactured in the same manner as in Experimental Example 1, except that a base layer with the unit weight condition of Table 1 below was applied, and the second plating layer (surface layer) was not formed before heat treatment.

### Experimental Example

Corrosion resistance Evaluation: An corrosion resistance evaluation (Ferroxyl test) was performed on the experimental examples based on the JIS-H-8617 standard. The corrosion resistance may be evaluated by using a Ferroxyl solution, which reacts with the iron (Fe) component of the nickel-plated heat-treated steel sheet to show a blue color.

Specifically, after impregnating an analysis filter paper with an aqueous Ferroxyl solution containing 1 wt% of potassium ferrocyanide, 1 wt% of potassium ferricyanide (potassium hexacyanoferrate(III)), and 6 wt% of NaCl, the filter paper was attached to the surface of the specimen of the experimental example (size 80 mm X 80 mm, width X length) and left for 30 minutes. After that, the filter paper was peeled off, and the presence or absence of blue spots on the surface of the specimen that was in contact with the filter paper was evaluated with the naked eye, and the results are shown in Table 1 below (A: no Ferroxyl reaction, B: 1 to 5 reaction spots, C: 6 or more reaction spots).

**[Table 1]**

| Category | Base layer unit weight (g/m²) | Surface layer unit weight (g/m²) | Nickel layer unit weight (g/m²) | Corrosion resistance evaluation |
|---|---|---|---|---|
| Experimental Example 1 | 22 | 4 | 26 | A |
| Experimental Example 2 | 22 | 8 | 30 | A |
| Experimental Example 3 | 24 | 4 | 28 | A |
| Experimental Example 4 | 24 | 4 | 28 | A |
| Experimental Example 5 | 30 | 7 | 37 | A |
| Experimental Example 6 | 24 | 8 | 32 | A |
| Experimental Example 7 | 50 | 10 | 60 | A |
| Experimental Example 8 | 30 | 5 | 35 | A |
| Experimental Example 9 | 26 | - | 26 | C |
| Experimental Example 10 | 20 | 4 | 24 | C |
| Experimental Example 11 | 30 | - | 30 | B |
| Experimental Example 12 | 20 | 15 | 35 | B |

Referring to the results of Table 1, it was found that Experimental Examples 1 to 8 had excellent corrosion resistance compared to Experimental Examples 9 and 11, in which the nickel layer comprised only a base layer without a surface layer.

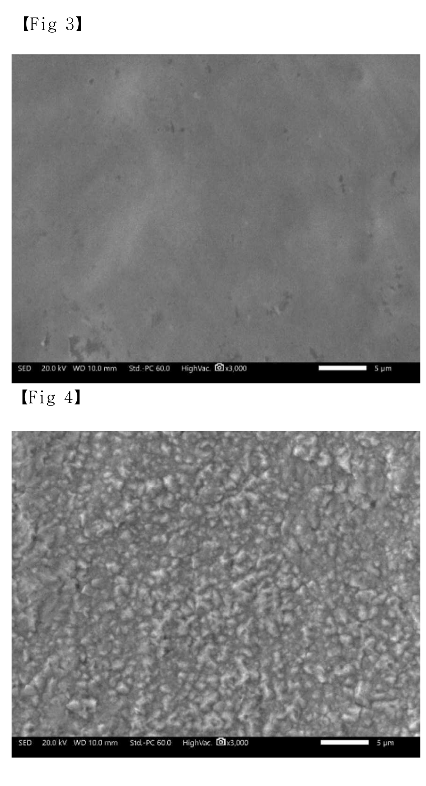

FIG. 3 is an SEM photograph illustrating the surface of Experimental Example 1, and FIG. 4 is an SEM photograph illustrating the surface of Experimental Example 9. Referring to FIGs. 3 and 4, it was found that Experimental Example 1, which applied the nickel layer according to the present disclosure, had excellent surface quality compared to Experimental Example 9. On the other hand, in Experimental Example 9, which did not apply the surface layer of the present disclosure, it was found that defects such as surface cracks and voids significantly increased compared to Experimental Example 1, resulting in degraded surface quality and durability.

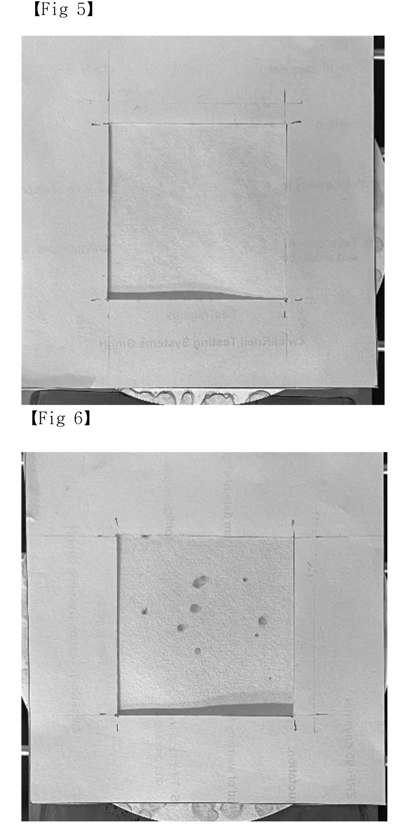

FIG. 5 is a photograph illustrating the corrosion resistance evaluation result of Experimental Example 1, and FIG. 6 is a photograph illustrating the corrosion resistance evaluation result of Experimental Example 9. Referring to FIGs. 5 and 6, it was found that Experimental Example 1 had excellent corrosion resistance compared to Experimental Example 9.

So far, the present disclosure has been examined centering on the examples. Those of ordinary skill in the art to which the present disclosure pertains will be able to understand that the present disclosure can be implemented in modified forms without departing from the essential characteristics of the present disclosure. Therefore, the disclosed examples should be considered from an illustrative point of view rather than a limiting point of view. The scope of the present disclosure is shown in the claims rather than the above description, and all differences within the equivalent scope should be construed as being included in the present disclosure.

### [Explanation of Reference Numerals]

| | | | |
|---|---|---|---|
| 10: | Base steel sheet | 20, 23: | Nickel plating layer |
| 21, 22: | Base layer | 24: | Surface layer |
| 100, 101: | Nickel-plated heat-treated steel sheet | | |

## Claims

1. A nickel-plated heat-treated steel sheet comprising:
a base steel sheet; and
a nickel layer formed on at least one surface of the base steel sheet,
wherein the nickel layer is laminated in two or more layers, and a unit weight sequentially decreases from the base steel sheet toward a surface of the nickel layer.

2. The nickel-plated heat-treated steel sheet of claim 1, wherein the nickel layer comprises one or more base layers and a surface layer sequentially formed on at least one surface of the base steel sheet, and
the base layer has a unit weight of 22 to 50 g/m², the surface layer has a unit weight of 4 to 10 g/m², and the nickel layer has a unit weight of 26 to 54 g/m².

3. A method for manufacturing a nickel-plated heat-treated steel sheet, the method comprising:
forming one or more first plating layers by electroplating using a first plating solution containing nickel sulfate, nickel chloride, and boric acid on at least one surface of a base steel sheet;
manufacturing a plated sheet by forming a second plating layer on the outermost surface of the first plating layer by electroplating using a second plating solution containing nickel sulfate, nickel chloride, boric acid, and an additive; and
heat-treating the plated sheet,
wherein,
in the plated sheet, a plating amount sequentially decreases from the base steel sheet toward the second plating layer,
the nickel-plated heat-treated steel sheet comprises the base steel sheet and a nickel layer formed on at least one surface of the base steel sheet, and
the nickel layer is laminated in two or more layers, and a unit weight sequentially decreases from the base steel sheet toward a surface of the nickel layer.
